# EUROPÄISCHE PATENTSCHRIFT

(11) **EP 1 154 205 B1**
(45) Veröffentlichungstag und Bekanntmachung des Hinweises auf die Patenterteilung: **03.12.2003**
(21) Anmeldenummer: 01109823.3
(22) Anmeldetag: 21.04.2001
(51) Int. Cl.: F24D 19/10

(54) **Wärmetransportsystem mit volumenstromgeregelter Wärmeerzeugungseinrichtung**
Heat transport system with heat production installation having flow rate control
Système de transport de chaleur avec installation de production de chaleur avec contrôle de débit

(30) Priorität: 11.05.2000 DE 10023121
(43) Veröffentlichungstag der Anmeldung: 14.11.2001
(73) Patentinhaber: Gerster, Eugen, 88524 Uttenweiler (DE)
(72) Erfinder: Gerster, Eugen, 88524 Uttenweiler (DE)
(74) Vertreter: Kiessling, Christian

(56) Entgegenhaltungen:
- EP-A- 0 086 110
- EP-A- 0 445 310
- EP-A- 0 874 200
- DE-A- 4 407 807
- DE-A- 19 714 760
- DE-A- 19 915 912
- DE-U- 29 914 303
- FR-A- 2 687 461
- DELPECH P: "BOUTEILLES CASSE-PRESSION ET DE MELANGE, CONCEPTION ET COMPORTEMENT" CFP CHAUD FROID PLOMBERIE, EDITIONS PARISIENNES. PARIS, FR, Nr. 596, 1. November 1997 (1997-11-01), Seiten 119-124, XP000724699 ISSN: 0750-1552

## Beschreibung

Die Erfindung betrifft ein Wärmetransportsystem mit einem Erzeugerkreis und einem Verbraucherkreis, die über einen Entkoppler miteinander verbunden sind, wobei der Erzeugerkreis eine Wärmeerzeugungseinrichtung, die Wärme an ein Flüssigkeitsmedium abgibt, ein erstes, mit dem Flüssigkeitsmedium gefülltes Rohrsystem sowie eine Pumpe zum Umwälzen des in dem ersten Rohrsystem befindlichen Flüssigkeitsmedium enthält, und wobei der Verbraucherkreis mindestens eine, das Flüssigkeitsmedium aufnehmende Wärmeabgabeeinrichtung, ein anderes Rohrsystem sowie eine Pumpe zum Umwälzen des in dem anderen Rohrsystem befindlichen Flüssigkeitsmedium enthält.

Wärmetransportsysteme der eingangs genannten Art werden im Stand der Technik verwendet, um die in einer Wärmeerzeugungseinrichtung produzierte Wärme mit Hilfe des Entkopplers auf flexible Weise an die zeitlichen Schwankungen unterliegende Wärmeaufnahme der mindestens einen Wärmeabgabeeinrichtung anzupassen. Die Pumpen des Erzeugerkreises einerseits, sowie des Verbraucherkreises andererseits sind dabei jeweils so bemessen, um eine der Größe des jeweiligen Kreises angemessene Transportleistung des Flüssigkeitsmediums sicherzustellen. Insbesondere in dem Fall, dass in dem Verbraucherkreis eine Mehrzahl parallel geschalteter Abgabeeinrichtungen vorgesehen ist, hat es sich jedoch gezeigt, dass der Wirkungsgrad bzw. die Wirtschaftlichkeit der herkömmlichen Wärmetransportsysteme den gewünschten Forderungen nicht entsprechen, da insbesondere der funktionale Ablauf einer Regelung einer Mehrzahl von Wärmeerzeugungseinrichtungen eines Erzeugerkreises nicht sicher gewährleistet ist und somit im Erzeugerkreis bereitgestellte Wärmeleistung nicht effektiv in den Verbraucherkreis überführbar ist.

Aus EP 0 445 310 A ist eine Vorrichtung der eingangs genannten Art bekannt. Diese Vorrichtung enthält eine Regelungseinrichtung für eine Vorlauftemperatur in einem Heizsystem mit einer Mehrkesselanlage mit mehreren parallel geschalteten Heizkesseln, bei der (im Primärkreis) jeweils ein Kesseltemperaturfühler zur Erfassung der Kesseltemperatur, ein Ventil in der Kesselvorlauf- oder Kesselrücklaufleitung sowie eine Umwälzpumpe vorgesehen sind und einen zwischen einen zwischen die Mehrkesselanlage und die Wärmeverbraucher geschalteten hydraulischen Entkoppler sowie mindestens eine elektronische Regeleinrichtung aufweist, welche die der Kesseltemperatur entsprechenden Ausgangssignale der Kesseltemperaturfühler (im Primärkreis) erfasst und auf der Basis einer dem Sollwert der Vorlauftemperatur entsprechenden Führungsgröße sowie unter bestimmten Betriebsbestimmungen auf der Basis einer dem Istwert der Vorlauftemperatur im Primärkreis der Mehrkesselanlage vor dem hydraulischen Entkoppler entsprechenden Vorlauftemperatur die Kesseltemperatur der Heizkessel und gegebenenfalls entsprechende Stellorgane und/oder Pumpen steuert sowie in Abhängigkeit vom Erfassten Wärmebedarf der Wärmeverbraucher die Heizkessel zu- und abschaltet und deren Ventile und Umwälzpumpen steuert, wobei zum Sicherstellen einer korrekten Vorlauftemperatur im Sekundärkreis die Vorlauftemperatur im Primärkreis vor dem hydraulischen Entkoppler aus den Kesseltemperaturen der in Betrieb befindlichen, mit geöffnetem Ventil zugeschalteten Heizkessel nach einer vorgegebenen Beziehung berechnet wird und der berechnete Wert als Istwert der Vorlauftemperatur verwendet wird. Die technische Lehre dieses Standes der Technik stellt somit ab auf eine Temperatursteuerung der Vorlauftemperatur im Sekundärkreis der Heizanlage mittels Temperaturmessungen an Heizkesseln im Primärkreis der Heizanlage und einer Temperaturberechnung der Vorlauftemperatur im Primärkreis der Heizanlage.

Aus "Delpeche P: 'Bouteilles casse-pression et de melange, conception et comportement' CFP Chaud froid plomberie, editions parisiennes. Paris, FR, Nr. 596, 1. November 1997 (1997-11-01) Seiten 119-124, XP000724699 ISSN: 0750-1552" sind Vorrichtungen und Verfahren bekannt, bei denen der Durchsatz eines Flüssigkeitsmediums in dem Rohrsystem eines Erzeugerkreises und eines Verbraucherkreises auf vielfältige unterschiedliche Weise geregelt ist.

Aufgabe der Erfindung ist es, ein Wärmetransportsystem zu schaffen, dessen Wirkungsgrad und Wirtschaftlichkeit durch das Schaffen einer funktionstüchtigen Wärmeerzeugungseinrichtungsregelung (Mehrkesselanlage) gegenüber den bekannten Wärmetransportsystemen verbessert ist.

Erfindungsgemäß wird diese Aufgabe dadurch gelöst, dass in dem Verbraucherkreis eine Sensoreinrichtung vorgesehen ist, die den Durchsatz des Flüssigkeitsmediums in diesem Rohrsystem misst, und eine Steuereinrichtung vorgesehen ist, die die Aktivität der in dem Erzeugerkreis vorgesehenen Pumpe nach Maßgabe der von der Sensoreinrichtung gemessenen Messgrößen steuert. Das erfindungsgemäße.Prinzip ist dabei ohne Abänderung auch auf Einrichtungen zur Erzeugung von Kälte übertragbar.

Bevorzugte Ausführungsformen der Erfindung sind Gegenstand der Unteransprüche.

Bei dem erfindungsgemäßen Wärmetransportsystem wird durch das Merkmal, dass in dem Verbraucherkreis eine Sensoreinrichtung vorgesehen ist, die den Durchsatz des Flüssigkeitsmediums in diesem Rohrsystem misst, und eine Steuereinrichtung vorgesehen ist, die die Aktivität der in dem Erzeugerkreis vorgesehenen Pumpe nach Maßgabe der von der Sensoreinrichtung gemessenen Messgrößen steuert, erreicht, dass die Durchsatzmenge des Flüssigkeitsmediums in dem Erzeugerkreis nach Maßgabe eines Durchsatzes des Flüssigkeitsmediums in dem Verbraucherkreis regelbar ist, so dass ein erhöhter Volumenstrom in den Wärmeabgabeeinrichtungen des Verbraucherkreises durch eine Erhöhung des Durchsatzes des Flüssigkeitsmediums in dem Erzeugerkreis kompensierbar ist. Dadurch ist es mittels des erfindungsgemäßen Systems erstmals ermöglicht, eine praktikable effektive Regelung einer Mehrzahl von Wärmeerzeugungseinrichtungen eines Erzeugerkreises sicher zu gewährleisten, und auch die Anzahl der zu einem Betrieb notwendigen Wärmeerzeugungseinrichtungen gegenüber herkömmlichen Wärmetransportsystemen zu begrenzen.

Gemäß einer ersten bevorzugten Ausführungsform des erfindungsgemäßen Wärmetransportsystems ist vorgesehen, dass zusätzlich zu der Sensoreinrichtung des Verbraucherkreises eine Sensoreinrichtung in dem Erzeugerkreis vorgesehen ist, und die Aktivität der in dem Erzeugerkreis vorgesehenen Pumpe nach Maßgabe der von den Sensoreinrichtungen gelieferten Daten derart steuerbar ist, dass der Volumenstrom des Erzeugerkreises in einem vorgebbaren Verhältnis zu dem Volumenstrom des Verbraucherkreises steht. Dabei ist es insbesondere vorteilhaft, dass zusätzlich zu der Sensoreinrichtung des Verbraucherkreises eine Sensoreinrichtung in dem Erzeugerkreis vorgesehen ist, und die Aktivität der in dem Erzeugerkreis vorgesehenen Pumpe oder Pumpen nach Maßgabe der von den Sensoreinrichtungen gelieferten Daten so gesteuert ist, dass der Betrag des Volumenstromes in dem Erzeugerkreis dem Betrag des Volumenstromes in dem Verbraucherkreis entspricht.

Gemäß einer anderen bevorzugten Ausführungsform des erfindungsgemäßen Wärmetransportsystems ist vorgesehen, dass die Sensoreinrichtung des Erzeugerkreises im Vorlaufstrom auf der Erzeugerseite in Strömungsrichtung vor dem hydraulischen Entkoppler angeordnet ist und die Sensoreinrichtung des Verbraucherkreises im Vorlaufstrom auf der Verbraucherseite hinter dem hydraulischen Entkoppler vorgesehen ist. Alternativ kann dabei auch vorgesehen sein, dass die Sensoreinrichtung des Erzeugerkreises im Rücklaufstrom auf der Erzeugerseite in Strömungsrichtung hinter dem hydraulischen Entkoppler angeordnet ist und die Sensoreinrichtung des Verbraucherkreises im Rücklaufstrom auf der Verbraucherseite vor dem hydraulischen Entkoppler vorgesehen ist. Dabei können die Sensoreinrichtungen insbesondere auch als Temperatursensoren ausgelegt sein, da bei Vorliegen gleicher Messdaten der Sensoreinrichtungen ein gleicher Betrag der Volumenströme in dem Erzeugerkreis und in dem Verbraucherkreis als festgestellt gilt. Eine Regelungseinrichtung kann deshalb so ausgelegt sein, dass bei Vorliegen gleicher Messdaten der Sensoreinrichtungen ein gleicher Betrag der Volumenströme in dem Erzeugerkreis und in dem Verbraucherkreis als festgestellt gilt.

Gemäß einer wichtigen bevorzugten Ausführungsform des erfindungsgemäßen Wärmetransportsystems ist vorgesehen, dass anstelle einer Wärmeerzeugungseinrichtung eine Mehrzahl von Wärmeerzeugungseinrichtungen im Erzeugerkreis vorgesehen ist, und die Pumpe so ausgelegt und bemessen ist, dass sie bereits bei Durchfluss des Volumenstromes des Erzeugerkreises durch nur eine Wärmeerzeugungseinrichtung einen Volumenstrom mit dem gleichen Betrag wie demjenigen des Verbraucherkreises zu fördern in der Lage ist. Dadurch ist ein optimaler Betrieb des erfindungsgemäßen Systems gewährleistet.

Gemäß einer anderen wichtigen bevorzugten Ausführungsform des erfindungsgemäßen Wärmetransportsystems ist vorgesehen, dass anstelle einer Wärmeerzeugungseinrichtung eine Mehrzahl von Wärmeerzeugungseinrichtungen im Erzeugerkreis vorgesehen ist, und die Pumpe so ausgelegt und bemessen ist, dass sie bei Durchfluss des Volumenstromes des Erzeugerkreises durch nur eine Wärmeerzeugungseinrichtung einen Volumenstrom zu fördern in der Lage ist, der auf einen Bruchteil des Betrages des Volumenstromes des Verbraucherkreises bemessen ist. Dadurch können unterschiedliche Vorlauftemperaturen in dem Erzeugerkreis und dem Verbraucherkreis hergestellt werden.

Gemäß einer alternativen Ausführungsform des erfindungsgemäßen Systems kann auch vorgesehen sein, dass anstelle einer Wärmeerzeugungseinrichtung eine Mehrzahl von Wärmeerzeugungseinrichtungen im Erzeugerkreis vorgesehen ist, und die Pumpe dabei so ausgelegt und bemessen ist, dass sie bei Durchfluss des Volumenstromes des Erzeugerkreises durch nur eine Wärmeerzeugungseinrichtung einen Volumenstrom zu fördern in der Lage ist, der auf ein Vielfaches des Betrages des Volumenstromes des Verbraucherkreises bemessen ist. Dadurch können kurzzeitige Schwankungen eines nicht optimal bemessenen Volumenstromes ausgeglichen werden.

Gemäß einer weiteren bevorzugten Ausführungsform des erfindungsgemäßen Wärmetransportsystems ist vorgesehen, dass alle Wärmeerzeugungseinrichtungen des Erzeugerkreises von einer gemeinsamen regelbaren Pumpe betrieben sind. Alternativ kann jedoch auch vorgesehen sein, dass jeder aus der Mehrzahl von Wärmeerzeugungseinrichtungen des Erzeugerkreises eine gesonderte regelbare Pumpe zugeordnet ist. Dadurch ist eine genaue und flexible regelbare Steuerung des Volumenstromes jeder einzelnen Wärmeerzeugungseinrichtung gewährleistet.

Gemäß einer anderen bevorzugten Ausführungsform des erfindungsgemäßen Wärmetransportsystems ist vorgesehen, dass die von der Volumenstrommesseinrichtung gemessenen Datensignale eine Regelungseinrichtung zum Regeln des eine Wärmeerzeugungseinrichtung passierenden Volumenstromes steuern. Die Regelungseinrichtung kann dabei beispielsweise als Regelventil ausgebildet sein.

Gemäß einer weiteren bevorzugten Ausführungsform des erfindungsgemäßen Wärmetransportsystems ist vorgesehen, dass die Volumenstrommesseinrichtung als Differenzdruckmesssensor ausgebildet ist, der einen Druckunterschied zwischen dem Eingang und dem Ausgang einer Wärmeerzeugungseinrichtung misst.

Gemäß einer in der Praxis wichtigen bevorzugten Ausführungsform des erfindungsgemäßen Wärmetransportsystems ist vorgesehen, dass der Entkoppler als hydraulische Entkopplereinrichtung ausgebildet ist, die von einem Hohlkörper gebildet ist, der mindestens einen Eingang sowie mindestens einen Ausgang für das Rohrsystem des Erzeugerkreises und mindestens einen Eingang sowie mindestens einen Ausgang für das Rohrsystem des Verbraucherkreises enthält. Dadurch ist auf einfache Weise die notwendige Kopplung zwischen dem Flüssigkeitsmedium im Erzeugerkreis und dem Verbraucherkreis sichergestellt.

Gemäß einer anderen bevorzugten Ausführungsform des erfindungsgemäßen Wärmetransportsystems ist vorgesehen, dass die Sensoreinrichtung in der Nachbarschaft des Entkopplers vorgesehen ist. Die Sensoreinrichtung ist dabei vorzugsweise an dem Ausgang des Verbraucherkreises des Entkopplers vorgesehen und kann dabei auch in den Ausgang des Verbraucherkreises des Entkopplers integriert sein. Dadurch ist auf sehr einfache wie auch effiziente Weise ein Messvorgang für die Durchsatzmenge des Flüssigkeitsmediums durch den Verbraucherkreis erreichbar.

Gemäß einer weiteren bevorzugten Ausführungsform des erfindungsgemäßen Wärmetransportsystems ist vorgesehen, dass der Entkoppler ein zweites, einen Nebenstromkreislauf zum Hauptstromkreislauf bildendes Rohrsystem darstellt, wobei ein Abschnitt des Nebenstromkreislaufes in den Hauptstromkreislauf integriert ist. Durch diese Maßnahme wird der Wirkungsgrad und die Wirtschaftlichkeit gegenüber den bekannten Wärmetransportsystemen weiter verbessert. Diese Ausführungsform bildet eine Alternative für den Fall, dass der Entkoppler in ein zweites, mindestens einen Nebenstromkreislauf zum Hauptstromkreislauf bildendes Rohrsystem integriert ist, wobei in dem Entkoppler ein Abschnitt des Nebenstromkreislaufes mit dem Hauptstromkreislauf zusammengelegt ist.

Die Sensoreinrichtung des erfindungsgemäßen Wärmetransportsystems ist vorzugsweise als elektronische Sensoreinrichtung ausgestaltet, die als Messgrößen elektrische Signale an die Steuereinrichtung abgibt. Elektronische Sensoreinrichtungen weisen dabei insbesondere den Vorteil auf, dass sie zum einen mit geringen Abmessungen sehr klein herstellbar sind und dem Flüssigkeitsmedium daher einen geringen Strömungswiderstand bieten, und auf der anderen Seite eine hohe Messgenauigkeit liefern.

Bei dem erfindungsgemäßen Wärmetransportsystem ist die Aktivität der in dem Erzeugerkreis vorgesehenen Pumpe vorzugsweise kontinuierlich regelbar, um die Pumpleistung kontinuierlich zu senken bzw. zu erhöhen. Alternativ könnte die in dem Erzeugerkreis vorgesehene Pumpe zeitabschnittsweise aktiviert bzw. deaktiviert werden.

Gemäß einer weiteren bevorzugten Ausführungsform des erfindungsgemäßen Wärmetransportsystems ist vorgesehen, dass die Pumpleistung der in dem Erzeugerkreis vorgesehenen Pumpe nicht in Relation zu dem Erzeuger ausgelegt ist sondern in Relation zu dem Volumenstrom des Verbraucherkreises ausgelegt ist.

Dabei kann es insbesondere vorgesehen sein, dass die Pumpleistung der in dem Erzeugerkreis vorgesehenen Pumpe so ausgelegt ist, dass sie in dem Erzeugerkreis einen Volumenstrom zu schaffen in der Lage ist, der etwa dem in dem Verbraucherkreises zirkulierenden Volumenstrom entspricht.

Alternativ kann es dabei vorgesehen sein, dass die Pumpe so ausgelegt ist, dass sie in dem Erzeugerkreis einen Volumenstrom zu schaffen in der Lage ist, der auf 105 % des in dem Verbraucherkreises zirkulierenden Volumenstromes bemessen ist.

Wiederum alternativ kann es dabei vorgesehen sein, dass die Pumpleistung der in dem Erzeugerkreis vorgesehenen Pumpe so ausgelegt ist, dass sie in dem Erzeugerkreis einen Volumenstrom zu schaffen in der Lage ist, der auf 110 % des in dem Verbraucherkreises zirkulierenden Volumenstromes bemessen ist.

Alternativ kann es dabei auch vorgesehen sein, dass die Pumpleistung der in dem Erzeugerkreis vorgesehenen Pumpe so ausgelegt ist, dass sie in dem Erzeugerkreis einen Volumenstrom zu schaffen in der Lage ist, der auf 115 % des in dem Verbraucherkreises zirkulierenden Volumenstromes bemessen ist, oder dass die Pumpleistung der in dem Erzeugerkreis vorgesehenen Pumpe so ausgelegt ist, dass sie in dem Erzeugerkreis einen Volumenstrom zu schaffen in der Lage ist, der auf 120 % des in dem Verbraucherkreises zirkulierenden Volumenstromes bemessen ist.

Alternativ kann es dabei vorgesehen sein, dass die Pumpleistung der in dem Erzeugerkreis vorgesehenen Pumpe so ausgelegt ist, dass sie in dem Erzeugerkreis einen Volumenstrom zu schaffen in der Lage ist, der auf 90 % des in dem Verbraucherkreises zirkulierenden Volumenstromes bemessen ist, oder auf 95 % des in dem Verbraucherkreises zirkulierenden Volumenstromes bemessen ist.

Bei dem erfindungsgemäßen Wärmetransportsystem kann die Wärmeerzeugungseinrichtung, die Wärme an ein das Flüssigkeitsmedium abgibt, vorzugsweise als Wärmetauscher ausgeführt sein. Als Wärmetauscher kommt dabei insbesondere ein Plattenwärmetauscher in Frage. Alternativ kann als Wärmetauscher beispielsweise auch ein Rohrbündelwärmetauscher, ein Fernwärmetauscher oder ein Abgaswärmetauscher vorgesehen sein.

Das erfindungsgemäße Wärmetransportsystem wird im folgenden anhand einer bevorzugten Ausführungsform erläutert, die in der Figur der Zeichnung dargestellt ist. Darin zeigt:

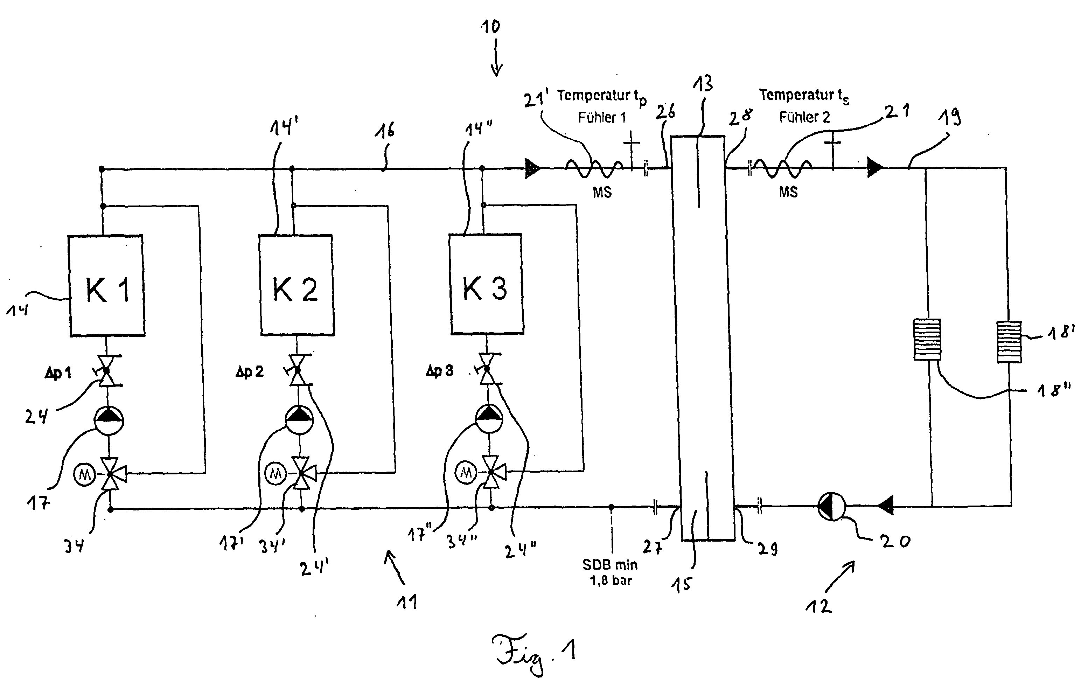

- Fig.1: einen schematischen Aufbau einer bevorzugten Ausführungsform des erfindungsgemäßen Wärmetransportsystems.

Das in Figur 1 dargestellte erfindungsgemäße Wärmetransportsystem 10 weist einen Erzeugerkreis 11 und einem Verbraucherkreis 12 auf, die über einen Entkoppler 13 miteinander verbunden sind, wobei der Erzeugerkreis 11 drei Wärmeerzeugungseinrichtungen 14, 14' und 14'' enthält, die Wärme an ein Flüssigkeitsmedium abgibt, das in einem übergeordneten Rohrsystem zirkuliert, das aus einem ersten Rohrsystem 16 des Erzeugerkreises 11 und einem zweiten Rohrsystem 19 des Verbraucherkreises 12 zusammengesetzt ist. Der Erzeugerkreis 11 enthält ein erstes, mit dem Flüssigkeitsmedium gefülltes Rohrsystem 16 mit Pumpen 17, 17' und 17'' zum Umwälzen des in dem ersten Rohrsystem 16 befindlichen Flüssigkeitsmediums, wobei jeder Wärmeerzeugungseinrichtung 14, 14', 14'' jeweils eine entsprechende Pumpe 17, 17', 17'' zugeordnet ist. jeder Wärmeerzeugungseinrichtung 14, 14', 14'' ist jeweils eine gesonderte Volumenstrommesseinrichtung 24, 24', 24'' zugeordnet, wobei die von den Volumenstrommesseinrichtungen 24, 24', 24'' gemessenen Datensignale jeweils eine Regelungseinrichtung 34, 34', 34'' zum Regeln des eine jeweilige Wärmeerzeugungseinrichtung 14, 14', 14'' passierenden Volumenstromes steuern.

Der Verbraucherkreis 12 enthält zwei das Flüssigkeitsmedium des Erzeugerkreises 11 aufnehmende Wärmeabgabeeinrichtungen 18, 18', ein Rohrsystem 19 sowie eine Pumpe 20 zum Umwälzen des in dem Rohrsystem 19 befindlichen Flüssigkeitsmediums. In dem Verbraucherkreis 12 ist erfindungswesentlich eine Sensoreinrichtung 21 vorgesehen, die den Durchsatz des Flüssigkeitsmediums in einem Rohrabschnitt dieses Rohrsystems 19 misst, wobei eine nicht dargestellte Steuereinrichtung vorgesehen ist, die die Aktivität der in dem Erzeugerkreis 11 vorgesehenen Pumpen 17, 17', 17'' nach Maßgabe der von der Sensoreinrichtung 21 gemessenen Messgrößen steuert derart, dass ein erhöhter Wärmeverbrauch in den Wärmeabgabeeinrichtungen 18, 18' des Verbraucherkreises 12 durch eine Erhöhung des Durchsatzes des Flüssigkeitsmediums in dem Erzeugerkreis 11 kompensierbar ist. Zusätzlich zu der in dem Verbraucherkreis 12 angeordneten Sensoreinrichtung 21 ist in dem Erzeugerkreis 11 eine ähnliche Sensoreinrichtung 21' vorgesehen, wobei die Aktivität der in dem Erzeugerkreis vorgesehenen Pumpen 17, 17' , 17'' nach Maßgabe der von den Sensoreinrichtungen 21, 21' gelieferten Daten so gesteuert ist, dass der Betrag des Volumenstromes in dem Erzeugerkreis 11 dem Betrag des Volumenstromes in dem Verbraucherkreis 12 entspricht. In dem dargestellten Ausführungsbeispiel deuten Pfeile die Flussrichtung des Flüssigkeitsmediums in dem Erzeugerkreis 11 wie in dem Verbraucherkreis 12 an.

Bei dem dargestellten erfindungsgemäßen Wärmetransportsystem ist ein Entkoppler 13 als hydraulischer Entkoppler ausgebildet ist, der von einem von dem Flüssigkeitsmedium 15 gefluteten Hohlkörper gebildet ist, der einen Eingang 26 sowie einen Ausgang 27 für das Rohrsystem 16 des Erzeugerkreises 11 und einen Eingang 28 sowie einen Ausgang 29 für das Rohrsystem 19 des Verbraucherkreises 12 enthält. Die Sensoreinrichtung 21 ist in der Nachbarschaft des Entkopplers 13 vorgesehen. Die Sensoreinrichtung 21 ist des weiteren als elektronische Sensoreinrichtung ausgebildet, die als Messgrößen elektrische Signale an die nicht dargestellte, elektrisch betriebene Steuereinrichtung abgibt. Die Aktivität der in dem Erzeugerkreis 11 vorgesehenen Pumpen 17, 17', 17'' ist über die Steuereinrichtung kontinuierlich regelbar, um die Pumpleistung der Pumpen 17, 17', 17'' kontinuierlich zu senken bzw. zu erhöhen, um so einen gesenkten bzw. erhöhten Wärmeverbrauch in den Wärmeabgabeeinrichtungen 18, 18' des Verbraucherkreises 12 durch ein Absenken bzw. ein Erhöhen des Durchsatzes des Flüssigkeitsmediums in dem Erzeugerkreis 11 zu kompensieren.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Wärmetransportsystem (10) mit einem Erzeugerkreis (11) und einem Verbraucherkreis (12), die über einen Entkoppler (13) miteinander verbunden sind, wobei der Erzeugerkreis (11) eine Wärmeerzeugungseinrichtung (14, 14', 14''), die Wärme an ein Flüssigkeitsmedium abgibt, ein erstes, mit dem Flüssigkeitsmedium gefülltes Rohrsystem (16) sowie eine Pumpe (17, 17', 17'') zum Umwälzen des in dem ersten Rohrsystem (16) befindlichen Flüssigkeitsmediums enthält, und wobei der Verbraucherkreis (12) mindestens eine, das Flüssigkeitsmedium aufnehmende Wärmeabgabeeinrichtung (18, 18'), ein anderes Rohrsystem (19) sowie eine Pumpe (20) zum Umwälzen des in dem anderen Rohrsystem (19) befindlichen Flüssigkeitsmediums enthält, **dadurch gekennzeichnet, dass** in dem Verbraucherkreis (12) eine Sensoreinrichtung (21) vorgesehen ist, die den Durchsatz des Flüssigkeitsmediums in diesem Rohrsystem (19) misst, und eine Steuereinrichtung vorgesehen ist, die die Aktivität der in dem Erzeugerkreis (11) vorgesehenen Pumpe (17) nach Maßgabe der von der Sensoreinrichtung (21) gemessenen Messgrößen steuert.

2. Vorrichtung nach Anspruch 1, **dadurch gekennzeichnet, dass** zusätzlich zu der Sensoreinrichtung (21) des Verbraucherkreises (12) eine Sensoreinrichtung (21') in dem Erzeugerkreis (11) vorgesehen ist, und die Aktivität der in dem Erzeugerkreis (11) vorgesehenen Pumpe (17, 17', 17'') nach Maßgabe der von den Sensoreinrichtungen (21) gelieferten Daten derart steuerbar ist, dass der Volumenstrom des Erzeugerkreises (11) in einem vorgebbaren Verhältnis zu dem Volumenstrom des Verbraucherkreises (12) steht.

3. Vorrichtung nach Anspruch 2, **dadurch gekennzeichnet, dass** zusätzlich zu der Sensoreinrichtung (21) des Verbraucherkreises (12) eine Sensoreinrichtung (21') in dem Erzeugerkreis (11) vorgesehen ist, und die Aktivität der in dem Erzeugerkreis (11) vorgesehenen Pumpe oder Pumpen (17, 17', 17'') nach Maßgabe der von den Sensoreinrichtungen (21) gelieferten Daten so gesteuert ist, dass der Betrag des Volumenstromes in dem Erzeugerkreis (11) dem Betrag des Volumenstromes in dem Verbraucherkreis (12) entspricht.

4. Vorrichtung nach einem der Ansprüche 2 oder 3, **dadurch gekennzeichnet, dass** die Sensoreinrichtung (21') des Erzeugerkreises (11) im Vorlaufstrom auf der Erzeugerseite in Strömungsrichtung vor dem hydraulischen Entkoppler (13) angeordnet ist und die Sensoreinrichtung (21) des Verbraucherkreises (12) im Vorlaufstrom auf der Verbraucherseite hinter dem hydraulischen Entkoppler (13) vorgesehen ist.

5. Vorrichtung nach einem der Ansprüche 2 oder 3, **dadurch gekennzeichnet, dass** die Sensoreinrichtung (21') des Erzeugerkreises (11) im Rücklaufstrom auf der Erzeugerseite in Strömungsrichtung hinter dem hydraulischen Entkoppler (13) angeordnet ist und die Sensoreinrichtung (21) des Verbraucherkreises (12) im Rücklaufstrom auf der Verbraucherseite vor dem hydraulischen Entkoppler (13) vorgesehen ist.

6. Vorrichtung nach einem der Ansprüche 4 oder 5, **dadurch gekennzeichnet, dass** die Sensoreinrichtungen (21, 21') als Temperatursensoren ausgelegt sind.

7. Vorrichtung nach Anspruch 6, **dadurch gekennzeichnet**, bei Vorliegen gleicher Messdaten der Sensoreinrichtungen (21, 21') ein gleicher Betrag der Volumenströme in dem Erzeugerkreis (11) und in dem Verbraucherkreis (12) als festgestellt gilt.

8. Vorrichtung nach einem der Ansprüche 2 bis 7, **dadurch gekennzeichnet, dass** anstelle einer Wärmeerzeugungseinrichtung (14) eine Mehrzahl von Wärmeerzeugungseinrichtungen (14, 14', 14'') im Erzeugerkreis (11) vorgesehen ist, und die Pumpe (17) so ausgelegt und bemessen ist, dass sie bereits bei Durchfluss des Volumenstromes des Erzeugerkreises (11) durch nur eine Wärmeerzeugungseinrichtung (14) einen Volumenstrom mit dem gleichen Betrag wie demjenigen des Verbraucherkreises (12) zu fördern in der Lage ist.

9. Vorrichtung nach einem der Ansprüche 2 bis 7, **dadurch gekennzeichnet, dass** anstelle einer Wärmeerzeugungseinrichtung (14) eine Mehrzahl von Wärmeerzeugungseinrichtungen (14, 14', 14'') im Erzeugerkreis (11) vorgesehen ist, und die Pumpe (17) so ausgelegt und bemessen ist, dass sie bei Durchfluss des Volumenstromes des Erzeugerkreises (11) durch nur eine Wärmeerzeugungseinrichtung (14) einen Volumenstrom zu fördern in der Lage ist, der auf einen Bruchteil des Betrages des Volumenstromes des Verbraucherkreises (12) bemessen ist.

10. Vorrichtung nach einem der Ansprüche 2 bis 7, **dadurch gekennzeichnet, dass** anstelle einer Wärmeerzeugungseinrichtung (14) eine Mehrzahl von Wärmeerzeugungseinrichtungen (14, 14', 14'') im Erzeugerkreis (11) vorgesehen ist, und die Pumpe (17) so ausgelegt und bemessen ist, dass sie bei Durchfluss des Volumenstromes des Erzeugerkreises (11) durch nur eine Wärmeerzeugungseinrichtung (14) einen Volumenstrom zu fördern in der Lage ist, der auf ein Vielfaches des Betrages des Volumenstromes des Verbraucherkreises (12) bemessen ist.

11. Vorrichtung nach einem der vorhergehenden Ansprüche, **dadurch gekennzeichnet, dass** alle Wärmeerzeugungseinrichtungen (14, 14', 14") des Erzeugerkreises (11) von einer gemeinsamen regelbaren Pumpe (17,17', 17") betrieben sind.

12. Vorrichtung nach einem der vorhergehenden Ansprüche, **dadurch gekennzeichnet, dass** jeder aus der Mehrzahl von Wärmeerzeugungseinrichtungen (14, 14', 14'') des Erzeugerkreises (11) eine gesonderte regelbare Pumpe (17, 17', 17'') zugeordnet ist.

13. Vorrichtung nach einem der vorhergehenden Ansprüche, **dadurch gekennzeichnet, dass** jeder Wärmeerzeugungseinrichtung (14, 14', 14'') eine gesonderte Volumenstrommesseinrichtung (24, 24', 24'') zugeordnet ist.

14. Vorrichtung nach einem der vorhergehenden Ansprüche, **dadurch gekennzeichnet, dass** die von der Volumenstrommesseinrichtung (24, 24', 24'') gemessenen Datensignale eine Regelungseinrichtung (34, 34', 34'') zum Regeln des eine Wärmeerzeugungseinrichtung (14, 14', 14'') passierenden Volumenstromes steuern.

15. Vorrichtung nach Anspruch 14, **dadurch gekennzeichnet, dass** die Regelungseinrichtung (34, 34', 34'') als Regelventil ausgebildet ist.

16. Vorrichtung nach Anspruch 15, **dadurch gekennzeichnet, dass** die Volumenstrommesseinrichtung (24, 24', 24'') als Differenzdruckmesssensor ausgebildet ist, der einen Druckunterschied zwischen dem Eingang und dem Ausgang einer Wärmeerzeugungseinrichtung (14, 14', 14'') misst.

17. Vorrichtung nach einem der Ansprüche 1 bis 16, **dadurch gekennzeichnet, dass** als Entkoppler (13) ein zweites, mindestens einen Nebenstromkreislauf zum Hauptstromkreislauf bildendes herkömmliches Rohrsystem (16, 19) vorgesehen ist, wobei ein Abschnitt des Nebenstromkreislaufes in den Hauptstromkreislauf integriert ist.

18. Vorrichtung nach einem der Ansprüche 1 bis 16, **dadurch gekennzeichnet, dass** der Entkoppler (13) als hydraulische Entkopplereinrichtung ausgebildet ist, die von einem Hohlkörper gebildet ist, der mindestens einen Eingang (26) sowie mindestens einen Ausgang (27) für das Rohrsystem (16) des Erzeugerkreises (11) und mindestens einen Eingang (28) sowie mindestens einen Ausgang (29) für das Rohrsystem (19) des Verbraucherkreises (12) enthält.

19. Vorrichtung nach Anspruch 18, **dadurch gekennzeichnet, dass** der Entkoppler (13) in ein zweites, mindestens einen Nebenstromkreislauf zum Hauptstromkreislauf bildendes Rohrsystem (19) integriert ist, wobei in dem Entkoppler (13) ein Abschnitt des Nebenstromkreislaufes mit dem Hauptstromkreislauf zusammengelegt ist.

20. Vorrichtung nach einem der vorhergehenden Ansprüche, **dadurch gekennzeichnet, dass** die Sensoreinrichtung (21, 21') als elektronische Sensoreinrichtung ausgebildet ist und als Messgrößen elektrische Signale an die Steuereinrichtung abgibt.

21. Vorrichtung nach einem der vorhergehenden Ansprüche, **dadurch gekennzeichnet, dass** die Aktivität der in dem Erzeugerkreis (11) vorgesehenen Pumpe (17, 17', 17'') kontinuierlich regelbar ist, um die Pumpleistung kontinuierlich zu senken bzw. zu erhöhen.

22. Vorrichtung nach Anspruch 21, **dadurch gekennzeichnet, dass** die Pumpleistung der in dem Erzeugerkreis (11) vorgesehenen Pumpe (17, 17', 17'') nicht in Relation zu dem Erzeuger ausgelegt ist, sondern in Relation zu dem Volumenstrom des Verbraucherkreises (12) ausgelegt ist.

23. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der etwa dem in dem Verbraucherkreises (12) zirkulierenden Volumenstrom entspricht.

24. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der auf 105 % des in dem Verbraucherkreises (12) zirkulierenden Volumenstromes bemessen ist.

25. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der auf 110 % des in dem Verbraucherkreises (12) zirkulierenden Volumenstromes bemessen ist.

26. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (12) einen Volumenstrom zu schaffen in der Lage ist, der auf 115 % des in dem Verbraucherkreises (12) zirkulierenden Volumenstromes bemessen ist.

27. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der auf 120 % des in dem Verbraucherkreises (12) zirkulierenden Volumenstromes bemessen ist.

28. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der auf 90 % des in dem Verbraucherkreises (12) zirkulierenden Volumenstromes bemessen ist.

29. Vorrichtung nach Anspruch 22, **dadurch gekennzeichnet, dass** die Pumpleistung der in dem Erzeugerkreis (11) vorgesehenen Pumpe (17, 17', 17'') so ausgelegt ist, dass sie in dem Erzeugerkreis (11) einen Volumenstrom zu schaffen in der Lage ist, der auf 95 % des in dem Verbraucherkreises (12) zirkulierenden Volumenstromes bemessen ist.

30. Vorrichtung nach einem der vorhergehenden Ansprüche, **dadurch gekennzeichnet, dass** die Wärmeerzeugungseinrichtung (14, 14', 14''), die Wärme an das Flüssigkeitsmedium (15) abgibt, als Wärmetauscher ausgeführt ist.

31. Vorrichtung nach Anspruch 30, **dadurch gekennzeichnet, dass** als Wärmetauscher ein Plattenwärmetauscher vorgesehen ist.

32. Vorrichtung nach Anspruch 30, **dadurch gekennzeichnet, dass** als Wärmetauscher ein Rohrbündelwärmetauscher vorgesehen ist.

33. Vorrichtung nach Anspruch 30, **dadurch gekennzeichnet, dass** als Wärmetauscher ein Abgaswärmetauscher vorgesehen ist.

34. Vorrichtung nach Anspruch 30, **dadurch gekennzeichnet, dass** als Wärmetauscher ein Fernwärmetauscher vorgesehen ist.

## Claims

1. A heat transfer system (10) comprising a generator circuit (11) and a consumer circuit (12) interconnected via a decoupler (13), the generator circuit (11) having heat-generating means (14, 14', 14") emitting heat to a liquid medium, a first piping system (16) filled with the liquid medium, and also a pump (17, 17', 17") for recirculating the liquid medium present in said first piping system (16), whilst the consumer circuit (12) comprises at least one heat-emitting contrivance (18, 18'), through which the liquid medium flows, a second piping system (19) and also a pump (20) for recirculating the liquid medium located in said second piping system (19), **characterized in that** there is provided, in the consumer circuit (12), a sensor contrivance (21) which measures the throughput of the liquid medium in this piping system (19), and there is provided control equipment which controls the activity of the pump (17) provided in the generator circuit (11) in accordance with values ascertained by the sensor contrivance (21).

2. A system as defined in claim 1, **characterized in that** there is provided, in addition to the sensor contrivance (21) of the consumer circuit (12), a sensor contrivance (21') in the generator circuit (11), and that the activity of the pump (17, 17', 17") provided in the generator circuit (11) can be controlled in accordance with the data supplied by the sensor contrivances (21) such that the volumetric flow rate in the generator circuit (11) bears a predefined ratio to the volumetric flow rate in the consumer circuit (12).

3. A system as defined in claim 2, **characterized in that** there is provided, in addition to the sensor contrivance (21) of the consumer circuit (12), a sensor contrivance (21') in the generator circuit (11), and the activity of the pump or pumps (17, 17', 17") in the generator circuit (11) is controlled in accordance with the data supplied by the sensor contrivances (21) such that the value of the volumetric flow rate in the generator circuit (11) is equal to the value of the volumetric flow rate in the consumer circuit (12).

4. A system as defined in claim 2 or claim 3, **characterized in that** the sensor contrivance (21') of the generator circuit (11) is disposed in the outflowing stream on the generator side upstream of the hydraulic decoupler (13) and the sensor contrivance (21) of the consumer circuit (12) is disposed in the outflowing stream on the consumer side downstream of the hydraulic decoupler (13).

5. A system as defined in claim 2 or claim 3, **characterized in that** the sensor contrivance (21') of the generator circuit (11) is disposed in the return stream on the generator side downstream of the hydraulic decoupler (13) and the sensor contrivance (21) of the consumer circuit (12) is disposed in the return stream on the consumer side upstream of the hydraulic decoupler (13).

6. A system as defined in claim 4 or claim 5, **characterized in that** the sensor contrivances (21, 21') are in the form of temperature sensors.

7. A system as defined in claim 6, **characterized in that** when the data supplied by the sensor contrivances (21, 21') are identical, the value of the volumetric rates of flow in the generator circuit (11) and in the consumer circuit (12) are registered as being identical.

8. A system as defined in any one of claims 2 to 7, **characterized in that** instead of one heat-generating device (14), a plurality of heat-generating devices (14, 14', 14") is provided in the generator circuit (11), and the pump (17) is designed and dimensioned such that it is capable, even when there is volumetric flow through only one heat-generating device (14) in the generator circuit (11), of producing a volumetric flow rate having the same value as that in the consumer circuit (12).

9. A system as defined in any one of claims 2 to 7, **characterized in that** instead of one heat-generating device (14), a plurality of heat-generating devices (14, 14', 14") is provided in the generator circuit (11), and the pump (17) is designed and dimensioned such that it is capable, even when there is volumetric flow in the generator circuit (11) through only one heat-generating device (14), of producing a volumetric flow rate which is equal to a fraction of the value of the volumetric flow rate in the consumer circuit (12).

10. A system as defined in any one of claims 2 to 7, **characterized in that** instead of one heat-generating device (14), a plurality of heat-generating devices (14, 14', 14") is provided in the generator circuit (11), and the pump (17) is designed and dimensioned such that it is capable, even when there is volumetric flow in the generator circuit (11) through only one heat-generating device (14), of producing a volumetric flow rate which is equal to a multiple of the value of the volumetric flow rate in the consumer circuit (12).

11. A system as defined in any one of the previous claims, **characterized in that** all of the heat-generating devices (14, 14', 14") of the generator circuit (11) are operated by a common variable-control pump (17, 17', 17").

12. A system as defined in any one of the previous claims, **characterized in that** to each of the plurality of heat-generating means (14, 14', 14") in the generator circuit (11) there is assigned a separate variable-control pump (17, 17', 17") .

13. A system as defined in any one of the previous claims, **characterized in that** to each of the heat-generating means (14, 14', 14") there is assigned a separate device (24, 24', 24") for measuring the volumetric flow rate.

14. A system as defined in any one of the previous claims, **characterized in that** the data signals measured by the device (24, 24', 24") for measuring the volumetric flow rate control regulating means (34, 34', 34") for regulating the volumetric flow rate of the liquid medium passing through the heat-generating means (14, 14' , 14") .

15. A system as defined in claim 14, **characterized in that** the regulating means (34, 34', 34") are in the form of control valves.

16. A system as defined in claim 15, **characterized in that** the device (24, 24', 24") for measuring the volumetric flow rate is in the form of a differential pressure sensor which measures the pressure difference between the input and output of a heat-generating device (14, 14', 14") .

17. A system as defined in any one of claims 1 to 16, **characterized in that** the decoupler (13) comprises a second conventional piping system (16, 19) forming at least one bypass circuit to the main circuit, a section of the bypass circuit being integrated in the main circuit.

18. A system as defined in any one of claims 1 to 16, **characterized in that** the decoupler (13) is in the form of a hydraulic decoupling device composed of a hollow body comprising at least one input (26) and at least one output (27) for the piping system (16) of the generator circuit (11) and at least one input (28) and at least one output (29) for the piping system (19) of the consumer circuit (12).

19. A system as defined in claim 18, **characterized in that** the decoupler (13) is integrated in a second piping system (19) forming at least one bypass circuit to the main circuit, and in the decoupler (13) a section of the bypass circuit is combined with the main circuit.

20. A system as defined in any one of the previous claims, **characterized in that** the sensor contrivance (21, 21') is in the form of an electronic sensor contrivance and transmits, as measured variables, electric signals to the control equipment.

21. A system as defined in any one of the previous claims, **characterized in that** the activity of the pump (17, 17', 17") provided in the generator circuit (11) is continuously variable to make it possible to continuously lower or raise the pumping performance.

22. A system as defined in claim 21, **characterized in that** the pumping performance of the pump (17, 17', 17") provided in the generator circuit (11) is designed not to suit the generator circuit but to suit the volumetric flow rate in the consumer circuit (12).

23. A system as defined in claim 22, **characterized in that** the pumping performance of the pump (17, 17', 17") provided in the generator circuit (11) is such that it is capable of producing a volumetric flow rate in the generator circuit (11) which is approximately equal to the volumetric flow rate of the liquid medium circulating through the consumer circuit (12).

24. A system as defined in claim 22, **characterized in that** the pumping performance of the pump (17, 17', 17") provided in the generator circuit (11) is such that it is capable of producing a volumetric flow rate in the generator circuit (11) which is equal to 105 % of the volumetric flow rate of the liquid medium circulating through the consumer circuit (12).

25. A system as defined in claim 22, **characterized in that** the pumping performance of the pump (17, 17', 17") provided in the generator circuit (11) is such that it is capable of producing a volumetric flow rate in the generator circuit (11) which is equal to 110 % of the volumetric flow rate of the liquid medium circulating through the consumer circuit (12).

26. A system as defined in claim 22, **characterized in that** the pumping performance of the pump (17, 17', 17") provided in the generator circuit (11) is such that it is capable of producing a volumetric flow rate in the generator circuit (12) which is equal to 115 % of the volumetric flow rate of the liquid medium circulating through the consumer circuit (12).

27. A system as defined in claim 22, **characterized in that** the pumping performance of the pump (17, 17', 17") provided in the generator circuit (11) is such that it is capable of producing a volumetric flow rate in the generator circuit (11) which is equal to 120 % of the volumetric flow rate of the liquid medium circulating through the consumer circuit (12).

28. A system as defined in claim 22, **characterized in that** the pumping performance of the pump (17, 17', 17") provided in the generator circuit (11) is such that it is capable of producing a volumetric flow rate in the generator circuit (11) which is equal to 90 % of the volumetric flow rate of the liquid medium circulating through the consumer circuit (12).

29. A system as defined in claim 22, **characterized in that** the pumping performance of the pump (17, 17', 17") provided in the generator circuit (11) is such that it is capable of producing a volumetric flow rate in the generator circuit (11) which is equal to 95 % of the volumetric flow rate of the liquid medium circulating through the consumer circuit (12).

30. A system as defined in any one of the previous claims, **characterized in that** the heat-generating device (14, 14', 14") emitting heat to the liquid medium (15) is in the form of a heat exchanger.

31. A system as defined in claim 30, **characterized in that** the heat exchanger is a plate-type heat exchanger.

32. A system as defined in claim 30, **characterized in that** the heat exchanger is a shell-and-tube heat exchanger.

33. A system as defined in claim 30, **characterized in that** the heat exchanger is a waste gas heat exchanger.

34. A system as defined in claim 30, **characterized in that** the heat exchanger is a district heat exchanger.

## Revendications

1. Système de transport de chaleur (10) comprenant un circuit de production (11) et un circuit utilisateur (12) raccordés l'un à l'autre par l'intermédiaire d'un élément de découplage (13), le circuit de production (11) comportant un dispositif de production de chaleur (14, 14', 14'') fournissant la chaleur à un milieu liquide, une première tuyauterie (16) remplie du milieu liquide et une pompe de circulation (17, 17', 17") du milieu liquide chargé dans la première tuyauterie (16), et le circuit utilisateur (12) comportant au moins un dispositif d'émission de chaleur (18, 18') recevant le milieu liquide, une autre tuyauterie (19) et une pompe (20) de circulation du milieu liquide chargé dans l'autre tuyauterie (19),
**caractérisé en ce qu'**un dispositif détecteur (21) est prévu dans le circuit utilisateur (12), qui détecte le débit de milieu liquide circulant dans cette tuyauterie (19), et qu'un dispositif de réglage est prévu qui règle l'activité de la pompe (17) prévue dans le circuit de production (11) au mesure des valeurs mesurées par le dispositif détecteur (21) .

2. Dispositif selon la revendication 1,
**caractérisé en ce qu'** en plus du dispositif détecteur (21) prévu dans le circuit utilisateur (12), un autre dispositif détecteur (21') est prévu dans le circuit de production (11), et l'activité de la pompe (17, 17', 17") prévue dans le circuit de production (11) peut être réglée au mesure des données fournies par les dispositifs détecteurs (21) de sorte que le courant volumétrique du circuit de production (11) se trouve dans une relation prédéterminée au courant volumétrique du circuit utilisateur (12).

3. Dispositif selon la revendication 2,
**caractérisé en ce qu'** en plus du dispositif détecteur (21) prévu dans le circuit utilisateur (12), un dispositif détecteur (21') est prévu dans le circuit de production (11), et l'activité de la pompe ou pompes (17, 17' , 17") prévue(s) dans le circuit de production (11) est réglée au mesure des données fournies par les dispositifs détecteurs (21) de sorte que la valeur du courant volumétrique du circuit de production (11) correspond à la valeur du courant volumétrique du circuit utilisateur (12).

4. Dispositif selon l'une quelconque des revendications 2 ou 3,
**caractérisé en ce que** le dispositif détecteur (21') du circuit de production (11) est disposé dans le courant aller côté production en amont de l'élément de découplage hydraulique (13) et le dispositif détecteur (21) du circuit utilisateur (12) est prévu dans le courant aller côté utilisateurs en aval de l'élément de découplage hydraulique (13) .

5. Dispositif selon l'une quelconque des revendications 2 ou 3,
**caractérisé en ce que** le dispositif détecteur (21') du circuit de production (11) est disposé dans le courant retour côté production en aval de l'élément de découplage hydraulique (13) et le dispositif détecteur (21) du circuit utilisateur (12) est prévu dans le courant retour côté utilisateurs en amont de l'élément de découplage hydraulique (13).

6. Dispositif selon l'une quelconque des revendications 4 ou 5,
**caractérisé en ce que** les dispositifs détecteurs (21, 21') sont conçus comme sonde de température.

7. Dispositif selon la revendication 6,
**caractérisé en ce que** dans le cas d'identité des données de mesure respectives des dispositifs détecteurs (21, 21'), l'identité des valeurs respectives des courants volumétriques du circuit de production (11) et du circuit utilisateur (12) est considérée définitive.

8. Dispositif selon l'une quelconque des revendications 2 à 7,
**caractérisé en ce qu'** au lieu d'un seul dispositif de production de chaleur (14), une multitude de dispositifs de production de chaleur (14, 14', 14'') est prévue dans le circuit de production (11), et que la pompe (17) est conçue et dimensionnée de sorte que le cours du courant volumétrique du circuit de production (11) à travers un seul dispositif de production de chaleur (14) suffit déjà pour qu'elle soit capable de refouler un courant volumétrique présentant la même valeur que celle du circuit utilisateur (12).

9. Dispositif selon l'une quelconque des revendications 2 à 7,
**caractérisé en ce qu'** au lieu d'un seul dispositif de production de chaleur (14), une multitude de dispositifs de production de chaleur (14, 14', 14") est prévue dans le circuit de production (11), et que la pompe (17) est conçue et dimensionnée de sorte que le cours du courant volumétrique du circuit de production (11) à travers un seul dispositif de production de chaleur (14) suffit pour qu'elle soit capable de refouler un courant volumétrique dimensionné pour une fraction de la valeur du courant volumétrique du circuit utilisateur (12).

10. Dispositif selon l'une quelconque des revendications 2 à 7,
**caractérisé en ce qu'** au lieu d'un seul dispositif de production de chaleur (14), une multitude de dispositifs de production de chaleur (14, 14', 14'') est prévue dans le circuit de production (11), et que la pompe (17) est conçue et dimensionnée de sorte que le cours du courant volumétrique du circuit de production (11) à travers un seul dispositif de production de chaleur (14) suffit pour qu'elle soit capable de refouler un courant volumétrique dimensionné pour un multiple de la valeur du courant volumétrique du circuit utilisateur (12).

11. Dispositif selon l'une quelconque des revendications précedentes,
**caractérisé en ce que** tous les dispositifs de production de chaleur (14, 14', 14") du circuit de production (11) sont opérés par une pompe (17, 17', 17") commune et réglable.

12. Dispositif selon l'une quelconque des revendications précedentes,
**caractérisé en ce qu'** une pompe (17, 17', 17") réglable séparée est attribuée à chacun de la multitude de dispositifs de production de chaleur (14, 14', 14") du circuit de production (11).

13. Dispositif selon l'une quelconque des revendications précedentes,
**caractérisé en ce qu'** un dispositif de mesure du courant volumétrique (24, 24', 24'') réglable séparé est attribué à chacun des dispositifs de production de chaleur (14, 14', 14'').

14. Dispositif selon l'une quelconque des revendications précedentes,
**caractérisé en ce que** les signaux de données mesurés par le dispositif de mesure du courant volumétrique (24, 24', 24'') commandent un dispositif de réglage (34, 34', 34'') qui règle le courant volumétrique passant à travers un dispositif de production de chaleur (14, 14', 14'').

15. Dispositif selon la revendication 14,
**caractérisé en ce que** le dispositif de réglage (34, 34', 34'') est réalisé sous forme d'une soupape de réglage.

16. Dispositif selon la revendication 15,
**caractérisé en ce que** le dispositif de mesure du courant volumétrique (24, 24', 24'') est réalisé sous forme d'un capteur de pression différentielle mesurant une différence de pression entre l'entrée et la sortie d'un dispositif de production de chaleur (14, 14', 14'').

17. Dispositif selon l'une quelconque des revendications 1 à 16,
**caractérisé en ce que** comme élément de découplage (13) est prévu une deuxième tuyauterie (16, 19) constituant au moins une circulation de courant secondaire additionnelle à la circulation de courant primaire, un segment de la circulation de courant secondaire étant intégrée dans la circulation de courant primaire.

18. Dispositif selon l'une quelconque des revendications 1 à 16,
**caractérisé en ce que** l'élément de découplage (13) est réalisé sous forme d'un dispositif de découplage hydraulique constitué par un corps creux présentant au moins une entrée (26) et au moins une sortie (27) pour la tuyauterie (16) du circuit de production (11) et au moins une entrée (28) et au moins une sortie (29) pour la tuyauterie (19) du circuit utilisateur (12).

19. Dispositif selon la revendication 18,
**caractérisé en ce que** l'élément de découplage (13) est intégré dans une deuxième tuyauterie (19) constituant au moins une circulation de courant secondaire additionnelle à la circulation de courant primaire, un segment de la circulation de courant secondaire étant réuni, dans l'élément de découplage (13), avec la circulation de courant primaire.

20. Dispositif selon selon l'une quelconque des revendications précedentes,
**caractérisé en ce que** le dispositif détecteur (21, 21') est réalisé sous forme d'un dispositif détecteur électronique fournissant des grandeurs de mesure en forme de signaux électriques au dispositif de réglage.

21. Dispositif selon selon l'une quelconque des revendications précedentes,
**caractérisé en ce que** l'activité de la pompe (17, 17', 17'') prévue dans le circuit de production (11) est à réglage continu pour réduire et augmenter progressivement son débit.

22. Dispositif selon la revendication 21,
**caractérisé en ce que** la capacité de la pompe (17, 17', 17") prévue dans le circuit de production (11) n'est pas conçue en relation au producteur mais en relation au courant volumétrique du circuit utilisateur (12).

23. Dispositif selon la revendication 22,
**caractérisé en ce que** la capacité de la pompe (17, 17', 17") prévue dans le circuit de production (11) est conçue de manière que la pompe est capable de refouler, dans le circuit de production (11), un courant volumétrique correspondant à peu près au courant volumétrique circulant dans le circuit utilisateur (12).

24. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 105 % du courant volumétrique circulant dans le circuit utilisateur (12).

25. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 110 % du courant volumétrique circulant dans le circuit utilisateur (12).

26. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 115 % du courant volumétrique circulant dans le circuit utilisateur (12).

27. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 120 % du courant volumétrique circulant dans le circuit utilisateur (12).

28. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 90 % du courant volumétrique circulant dans le circuit utilisateur (12).

29. Dispositif selon la revendication 22,
**caractérisé en ce que** la capacité de la pompe (17, 17', 17'') prévue dans le circuit de production (11) est conçue de manière qu'elle est capable de refouler, dans le circuit de production (11), un courant volumétrique dimensionné à 95 % du courant volumétrique circulant dans le circuit utilisateur (12).

30. Dispositif selon selon l'une quelconque des revendications précedentes,
**caractérisé en ce que** le dispositif de production de chaleur (14, 14', 14'') fournissant de la chaleur au milieu liquide (15) est réalisé en forme d'un échangeur thermique.

31. Dispositif selon la revendication 30,
**caractérisé en ce que** le échangeur thermique est un échangeur de chaleur à plaques.

32. Dispositif selon la revendication 30,
**caractérisé en ce que** le échangeur thermique est un échangeur de chaleur à faisceau tubulaire.

33. Dispositif selon la revendication 30,
**caractérisé en ce que** le échangeur thermique est un échangeur de chaleur des gaz brûlés.

34. Dispositif selon la revendication 30,
**caractérisé en ce que** le échangeur thermique est un échangeur de chaleur à distribution collective.
